# EUROPÄISCHE PATENTANMELDUNG

(11) **EP 1 450 134 A2**
(43) Veröffentlichungstag der Anmeldung: **25.08.2004**
(21) Anmeldenummer: 04001290.8
(22) Anmeldetag: 22.01.2004
(51) Int. Cl.: G01D 4/00

(54) **Verfahren und System zur Zählerstandserfassung**

(30) Priorität: 09.02.2003 DE 10305294
(71) Anmelder: Deutsche Telekom AG, 53113 Bonn (DE)
(72) Erfinder: Gittermann, Henning, 38170 Schöppenstedt (DE); Seide, Rolf, Dipl.-Ing., 38159 Vechelde (DE)

(57) **Zusammenfassung**

Bei einem Verfahren zur Zählerstandserfassung wird ein Verbraucher (10) aufgefordert, den Stand eines bestimmten Zählers abzulesen und rückzumelden. Die initiierende Aufforderung an den Verbraucher (10) erfolgt auf telefonischem Wege durch einen Sprachcomputer (4). Ein System zur Zählerstandserfassung weist einen Sprachcomputer (4) und/oder ein Intemetservicecenter (6) und/oder ein SMS Center (7) und/oder ein MMS Center (8) und/oder ein Telefaxcenter (9) auf.

## Beschreibung

Die Erfindung betrifft ein Verfahren und ein System zur Zählerstandserfassung, insbesondere zur Erfassung des Zählerstandes von Energie-, Wasser- oder Gaszählern.

Bereits an dieser Stelle sei ausdrücklich darauf hingewiesen, daß im Rahmen der vorliegenden Patentanmeldung die Begriffe "Energieversorger" und "Versorger" sehr weit gefaßt werden. Es fallen darunter nicht nur Elektroenergieversorger, sondern beispielsweise auch Lieferanten von Wasser, Gas, Dampf, Öl oder ähnlichem. Dementsprechend umfaßt der Begriff des "Zählers" im Rahmen der vorliegenden Patentanmeldung beispielsweise Elektroenergiezähler, Wasserzähler, Gaszähler und ähnliche bei Verbrauchern installierte Zähler.

Die Erfassung von Verbrauchsdaten stellt für jedes Energieversorgungsuntemehmen (EVU) ein Problem dar. Der Zähler ist beim Kunden (Verbraucher) installiert und hat im Normalfall keine Verbindung zu den betriebswirtschaftlichen Systemen des EVU. Der Einsatz von Fernableseeinheiten, wie er z.B. aus der US 4,713,837 bekannt ist, ist wirtschaftlich erst bei mehr als zwei Ablesungen pro Jahr vertretbar. Dies ist im Segment Tarifkunden nicht gegeben. In diesem Segment wird einmal pro Jahr der Zählerstand erfaßt und für die Jahresverbrauchsabrechnung verarbeitet.

Die Jahresverbrauchsabrechnung wird durch die jährlich einmal durchzuführende Ablesung der Zählerstände initiiert. Je nach Größe des EVU gibt es eine Stichtagsablesung oder ein über das Jahr verteiltes Verfahren (Ablesegruppen). Hierbei werden zwei Verfahren verwendet: Ablesung durch Personal oder Selbstablesung der Kunden. Als Ablesepersonal können sowohl festangestellte Mitarbeiter als auch Saisonarbeitskräfte (Schüler, Studenten, Hausfrauen und Rentner) zum Einsatz kommen.

Die Daten zur Ablesung (Kundendaten) werden aus dem Billing System des EVU bereitgestellt. Zur Plausibilisierung der Zählerstände werden die Verbrauchsdaten aus dem Vorjahr herangezogen.

Das Ablesepersonal erhält Listen zur Erfassung der Zählerstandsdaten. Eine geeignete Routenplanung ist obligatorisch. Vorteil ist die hohe Quote der abgelesenen Zählerstände. Nachteil sind die zum Teil erheblichen Kosten.

Die Selbstablesung durch den Kunden ist heute ebenfalls eine gängige und dazu gegenüber dem eben beschriebenen Verfahren kostengünstigere Methode. Aus dem Stand der Technik sind hierzu Zählerstandserfassungsverfahren und -systeme bekannt, bei denen die Kundendaten auf sogenannte Selbstablesekarten aufgedruckt werden. Diese Selbstablesekarten werden dann dem Kunden per Briefpost übersandt. Der Kunde trägt die Zählerstände in die dafür vorgesehenen Felder der Karte ein. Das Porto für die Rücksendung übernimmt das EVU. Nachteil hierbei ist die relativ hohe Quote der nicht rückgemeldeten Zählerstände von 25%, die mit erheblichen Nachbearbeitungskosten verbunden ist. Vorteilhaft sind die geringen Kosten für die gemeldeten Zählerstände.

Bei beiden oben erläuterten Verfahren sind mehr oder weniger aufwendige Nacharbeiten durch Außendienstpersonal notwendig. Zur Kostenreduzierung wird auch ein Schätzverfahren angewendet. Schätzungen sind aber nur zweimal zulässig, danach muß eine Ablesung erfolgen.

Der Erfindung liegt die Aufgabe zugrunde, ein Verfahren und ein System zur Zählerstandserfassung bereitzustellen, die gegenüber den aus dem Stand der Technik bekannten Verfahren und Systemen eine verbesserte Synthese von Nutzerfreundlichkeit und Kostengünstigkeit bieten.

Erfindungsgemäß wird diese Aufgabe gelöst durch ein Verfahren nach Anspruch 1, durch ein Verfahren nach Anspruch 2, durch ein Verfahren nach Anspruch 5, durch ein Verfahren nach Anspruch 6, durch ein Verfahren nach Anspruch 7, durch ein Verfahren nach Anspruch 9, durch ein Verfahren nach Anspruch 10, durch ein Verfahren nach Anspruch 11, durch ein Verfahren nach Anspruch 12, durch ein Verfahren nach Anspruch 13, durch ein System nach Anspruch 23, durch ein System nach Anspruch 27, durch ein System nach Anspruch 28, durch ein System nach Anspruch 29 und durch ein System nach Anspruch 30.

Die erfindungsgemäßen Lösungen verschaffen sowohl dem Versorger, als auch dem Verbraucher Vorteile. Es ergibt sich eine Kostenreduzierung durch die Verringerung bzw. das gänzliche Entfallen von Portoaufwendungen für das Hin- und Herschicken von Selbstablesekarten. Nachforschungen können schon während der Ablesephase durchgeführt werden. Dadurch beschleunigt sich die Rechnungslegung. Außerdem wird die Umwelt durch weniger Außendiensteinsätze mit entsprechend weniger Emissionen belastet.

Vorteilhafte und bevorzugte Weiterbildungen des erfindungsgemäßen Verfahrens nach Anspruch 1 sind Gegenstand der Ansprüche 8 und 14 bis 22. Vorteilhafte und bevorzugte Weiterbildungen des erfindungsgemäßen Verfahrens nach Anspruch 2 sind Gegenstand der Ansprüche 3, 4, 8 und 14 bis 22. Vorteilhafte und bevorzugte Weiterbildungen des erfindungsgemäßen Verfahrens nach jedem einzelnen der Ansprüche 5 bis 7 sind Gegenstand der Ansprüche 14 bis 22. Vorteilhafte und bevorzugte Weiterbildungen des erfindungsgemäßen Verfahrens nach Anspruch 9 sind Gegenstand der Ansprüche 17 und 18. Eine vorteilhafte und bevorzugte Weiterbildung des erfindungsgemäßen Verfahrens nach Anspruch 11 ist Gegenstand des Anspruchs 15. Eine vorteilhafte und bevorzugte Weiterbildung des erfindungsgemäßen Verfahrens nach Anspruch 12 ist Gegenstand des Anspruchs 20.

Vorteilhafte und bevorzugte Ausführungsformen des erfindungsgemäßen Systems nach Anspruch 23 sind Gegenstand der Ansprüche 24 bis 26 und 31 bis 63. Vorteilhafte und bevorzugte Ausführungsformen des erfindungsgemäßen Systems nach Anspruch 27 sind Gegenstand der Ansprüche 32 bis 63. Vorteilhafte und bevorzugte Ausführungsformen des erfindungsgemäßen Systems nach Anspruch 28 sind Gegenstand der Ansprüche 31 und 33 bis 63. Vorteilhafte und bevorzugte Ausführungsformen des erfindungsgemäßen Systems nach Anspruch 29 sind Gegenstand der Ansprüche 31, 32 und 34 bis 63. Vorteilhafte und bevorzugte Ausführungsformen des erfindungsgemäßen Systems nach Anspruch 30 sind Gegenstand der Ansprüche 31 bis 33 und 35 bis 63.

Nachfolgend werden vorteilhafte und bevorzugte Ausführungsbeispiele der Erfindung anhand von Figuren erläutert. Es zeigt:
- Fig. 1: ein schematisches Blockbild eines ersten Ausführungsbeispiels eines erfindungsgemäßen Systems,
- Fig. 2: ein schematisches Blockbild eines zweiten Ausführungsbeispiels eines erfindungsgemäßen Systems,
- Fig. 3: ein schematisches Blockbild eines dritten Ausführungsbeispiels eines erfindungsgemäßen Systems,
- Fig. 4: ein schematisches Blockbild eines vierten Ausführungsbeispiels eines erfindungsgemäßen Systems,
- Fig. 5: ein schematisches Blockbild eines fünften Ausführungsbeispiels eines erfindungsgemäßen Systems,
- Fig. 6: ein schematisches Blockbild eines sechsten Ausführungsbeispiels eines erfindungsgemäßen Systems,
- Fig. 7: ein schematisches Blockbild eines siebenten Ausführungsbeispiels eines erfindungsgemäßen Systems,
- Fig. 8: ein schematisches Blockbild eines achten Ausführungsbeispiels eines erfindungsgemäßen Systems,
- Fig. 9: ein schematisches Blockbild eines neunten Ausführungsbeispiels eines erfindungsgemäßen Systems,
- Fig. 10: ein schematisches Blockbild eines zehnten Ausführungsbeispiels eines erfindungsgemäßen Systems,
- Fig. 11: ein schematisches Blockbild eines elften Ausführungsbeispiels eines erfindungsgemäßen Systems,
- Fig. 12: ein schematisches Blockbild eines zwölften Ausführungsbeispiels eines erfindungsgemäßen Systems und
- Fig. 13: ein schematisches Blockbild eines dreizehnten Ausführungsbeispiels eines erfindungsgemäßen Systems.

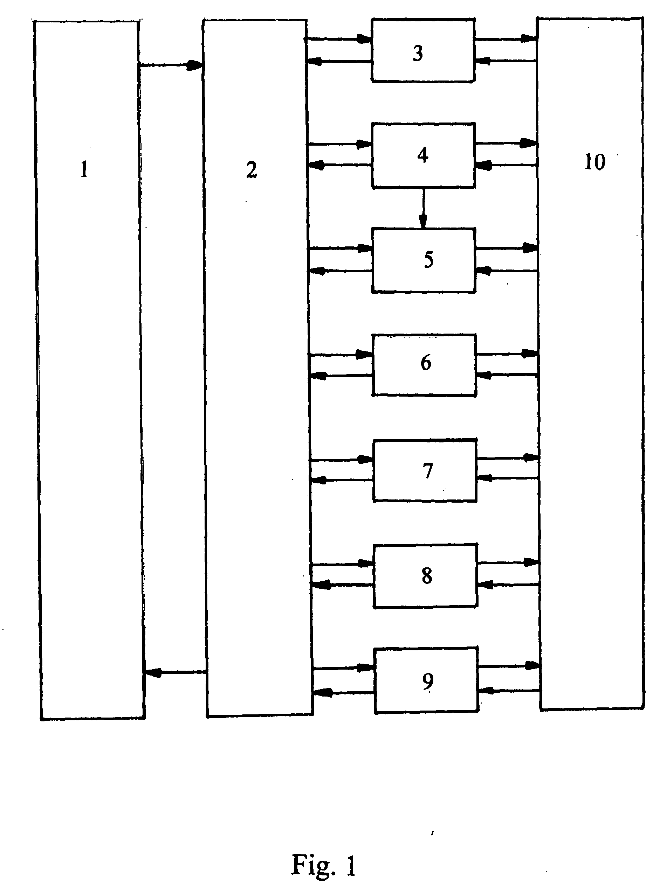

Im Blockbild von Fig. 1 bezeichnet das Bezugszeichen 1 einen Versorger, z.B. einen Energieversorger, der den Haushalt eines Kunden (Verbraucher) 10 mit Elektroenergie versorgt. Im Haus des Verbrauchers 10 befindet sich ein Elektroenergiezähler (im folgenden einfach als "Zähler" bezeichnet) zur Messung des Elektroenergieverbrauchs durch den Kunden (Verbraucher) 10. Der in Fig. 1 schematisch gezeigte Verbraucher 10 steht dabei selbstverständlich nur repräsentativ für eine Vielzahl von Verbrauchern, die der Versorger 1 versorgt und bei denen er Zählerstände erfassen muß. Obwohl die im folgenden dargestellten Ausführungsbeispiele erfindungsgemäßer Verfahren und Systeme nur unter Bezugnahme auf einen einzigen Verbraucher 10 beschrieben sind, versteht es sich von selbst, daß eine entsprechende Übertragung der Systemdetails und Verfahrensschritte auf den Fall der Zählerstandserfassung bei mehreren Verbrauchern trivial und ohne weiteres möglich ist.

Eine Datenbank 2 speichert für den Versorger 1 in Bezug auf die Zählerablesung und Verbrauchsabrechnung relevante Kundendaten. Darüber hinaus dient die Datenbank 2 bei dem vorliegend erläuterten Ausführungsbeispiel der Erfindung zur Datentransfersteuerung. Datentransferverbindungen und Datentransferrichtungen sind im Blockbild von Fig. 1 sowie in allen weiteren Figuren der vorliegenden Patentanmeldung durch Pfeile symbolisiert.

Der Versorger 1 übermittelt an die Datenbank 2 Kundendaten und Verbrauchsdaten des letzten Jahres. Die Datenbank 2 bereitet diese Daten auf und übermittelt sie an die im folgenden Absatz näher erläuterten Einheiten 3 bis 9.

Eine in der Datenbank 2 implementierte Steuerlogik überwacht und steuert verschiedene Verfahrensabläufe innerhalb des dargestellten Ausführungsbeispiels des erfindungsgemäßen Systems. Insbesondere werden folgende Funktionen ausgeführt:
- Bereitstellen und Übermitteln von Daten, die zur Auslösung einer Aufforderung an den Verbraucher 10, den Stand des Zählers abzulesen und rückzumelden, relevant sind, an
   - ein Kartendienstleistungszentrum 3,
   - einen Sprachcomputer 4,
   - ein Call Center 5,
   - ein Internetservicecenter 6,
   - ein SMS Center 7,
   - ein MMS Center 8 und
   - ein Telefaxcenter 9,
- Überwachung und Verarbeitung von über das Kartendienstleistungszentrum 3, den Sprachcomputer 4, das Call Center 5, das Internetservicecenter 6, das SMS Center 7, das MMS Center 8 und das Telefaxcenter 9 an die Datenbank 2 rückgemeldeten Zählerstandsdaten und von Informationen über Nichterreichbarkeit eines Verbrauchers 10,
- Auslösung von Nachforschungen durch das Call Center 5,
- Überprüfung der Daten auf Plausibilität und
- Bereitstellung von Statistiken.

Der Sprachcomputer 4 ist im dargestellten Ausführungsbeispiel eines erfindungsgemäßen Systems über eine Internet-Anwendung an die Datenbank 2 angebunden und auf diesem Wege zum Datenaustausch mit der Datenbank 2 in der Lage. Bei einem besonders bevorzugten Ausführungsbeispiel eines erfindungsgemäßen Verfahrens wird der Verbraucher 10 durch den Sprachcomputer 4 auf telefonischem Wege aufgefordert, den Stand des Zählers abzulesen und rückzumelden. Der Sprachcomputer 4 ist im dargestellten Ausführungsbeispiel eines erfindungsgemäßen Systems als Sprachplattform eingerichtet, die in der Lage ist, Sprachnachrichten zu erzeugen und auf telefonischem Wege an den Verbraucher 10 zu richten. Gleichzeitig kann diese Sprachplattform vom Verbraucher 10 auf telefonischem Wege an sie gerichtete Nachrichten erkennen und verarbeiten, wobei sowohl Spracheingaben als auch Eingaben über eine Telefontastatur akzeptiert, erkannt und verarbeitet werden.

Bei der Rückmeldung an den Sprachcomputer 4 identifiziert sich der Verbraucher 10 mit einer Abnahmestellennummer. Der Sprachcomputer 4 selektiert über eine Online-Schnittstelle den Datensatz und fordert zur Eingabe der Werte auf.

Zur Absicherung von Fehlersituationen und zur Erhöhung des Kundenkomforts ist der Sprachcomputer 4 direkt mit dem Call Center 5 verbunden. Bei Computerstörungssituationen erfolgt eine Umleitung aller beim Sprachcomputer 4 eingehenden Anrufe an das Call Center 5. Auch optional kann ein Verbraucher 10, der zunächst den Sprachcomputer 4 kontaktiert hat, dann aber doch lieber mit dem Call Center 5 kommunizieren möchte, seinen Anruf vom Sprachcomputer 4 an das Call Center 5 umleiten lassen.

Das Call Center 5, das über eine Internet-Anwendung mit der Datenbank 2 kommuniziert, führt persönliche Kundengespräche, die aus dem Sprachcomputer 4 umgeleitet wurden. Darüber hinaus werden durch das Call Center 5 Nachforschungsgespräche geführt.

Die Rückmeldung des Zählerstandes muß bei dem in Fig. 1 dargestellten Ausführungsbeispiel eines erfindungsgemäßen Systems jedoch nicht unbedingt durch einen Telefonanruf an den Sprachcomputer 4 erfolgen. Vielmehr kann die Rückmeldung des Zählerstandes auf einem beliebigen der in Fig. 1 durch die entsprechenden Pfeile symbolisierten Rückkanäle erfolgen. So kann der Verbraucher 10 z.B. über Mobilfunk oder über das Festnetz eine Kurznachricht an das SMS Center 7 schicken. Der Verbraucher 10 hat aber auch die Möglichkeit, den Zählerstand per Multimedianachricht an das MMS Center 8 zu schicken. Eine solche Multimedianachricht könnte z.B. auch ein Foto des aktuellen Zählerskalenstandes beinhalten. Alternativ dazu kann der Verbraucher 10 aber auch eine e-mail an das Internetservicecenter 6 oder ein Telefax an das Telefaxcenter 9 senden. Auch eine Rückmeldung in Kartenform per Post an das Kartendienstleistungszentrum 3 oder ein direkter Anruf beim Call Center 5 sind möglich. Darüber hinaus stellt das Internetservicecenter 6 dem Verbraucher 10 ein Internet-Eingabeformular bereit, in welches der Verbraucher 10 seine relevanten Daten in Bezug auf die Zählerstandsablesung eintragen und es dann über das Internet an das Internetservicecenter 6 abschicken kann.

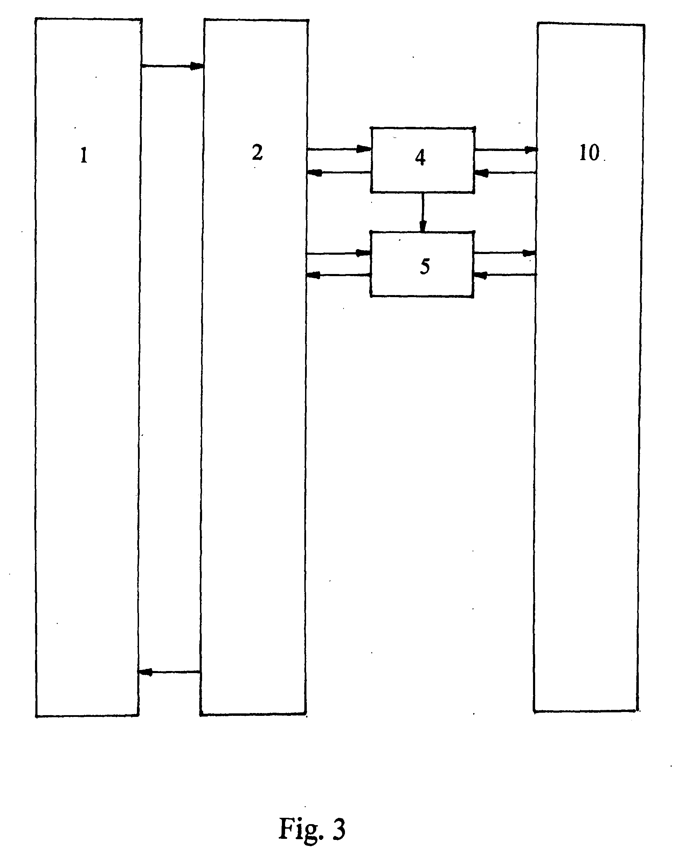

An dieser Stelle sei ausdrücklich darauf hingewiesen, daß weder das Internetservicecenter 6, noch das SMS Center 7, noch das MMS Center 8, noch das Telefaxcenter 9 unbedingt, so wie in Fig. 1 dargestellt, als eigenständige Einheiten ausgebildet sein müssen. Bei anderen Ausführungsbeispielen erfindungsgemäßer Systeme werden die Funktionen dieser Blöcke 6 bis 9 durch eine direkt in der Datenbank 2 implementierte Steuerungs- und Verarbeitungslogik mit übernommen. Bei wieder anderen Ausführungsbeispielen erfindungsgemäßer Systeme können diese oder andere der in Fig. 1 dargestellten Funktionen auch gänzlich oder teilweise fehlen. Auf all dies wird weiter unten mit Bezug auf die Fig. 3 bis 13 noch näher eingegangen.

In jedem Falle erfolgt eine Umwandlung der vom Verbraucher 10 rückgemeldeten Daten in ein von der Datenbank 2 verarbeitbares Datenformat. So werden z.B. im Kartendienstleistungszentrum 3 vom Verbraucher eingehende Kartenrückläufer gescannt, d.h. also digitalisiert, und dann die für den weiteren Abrechnungsprozeß relevanten Daten aus dem gescannten Image digital weiterverarbeitet. So stehen schließlich Zählerdaten im Datenbankformat und als Image bereit. Daten und Image jeder Karte werden an die Datenbank 2 übertragen. Die Karten als solche werden archiviert oder dem Versorger 1 archivierfähig übergeben. Ganz ähnliche Verfahrensschritte laufen im Telefaxcenter 9 ab.

Die an die Datenbank 2 übermittelten Daten werden innerhalb der Datenbank 2 auf Plausibilität geprüft. Nicht gemeldete Zählerstände werden über das Call Center 5 nachgeforscht. Hierzu ruft ein Call Center Agent den Verbraucher 10 an und fragt nach dem Zählerstand. Die plausibilisierten Zählerstände werden an den Versorger 1 übertragen. Bei dem vorliegenden Ausführungsbeispiel eines erfindungsgemäßen Systems werden darüber hinaus durch die Datenbank 2 laufend Statistiken erstellt und über das Internet dem Versorger 1 und ggf. weiteren zum Zugriff Autorisierten bereitgestellt.

Obwohl es, wie oben erwähnt, besonders bevorzugt ist, die initiierende Aufforderung an den Verbraucher 10 auf telefonischem Wege durch den Sprachcomputer 4 erfolgen zu lassen, ergeht die initiierende Aufforderung zur Zählerablesung und Zählerstandsrückmeldung an den Verbraucher 10 bei anderen Ausführungsbeispielen eines erfindungsgemäßen Verfahrens auf anderem Wege, ohne die vielfältigen, vorstehend erläuterten Rückmeldungsmöglichkeiten für den Verbraucher 10 einzuschränken.

Beispielsweise können im Kartendienstleistungszentrum 3 auf der Grundlage der von der Datenbank 2 bereitgestellten Daten automatisch personalisierte Selbstablesekarten gedruckt und an die Verbraucher 10 versandt werden. Entsprechend können auf der Grundlage der von der Datenbank 2 bereitgestellten Daten personalisierte Zählerstandsableseaufforderungen in Form einer e-mail oder einer Kurznachricht oder einer Multimedianachricht oder eines Telefaxes erzeugt und vom Internetservicecenter 6, vom SMS Center 7, vom MMS Center 8 oder vom Telefaxcenter 9 über jeweils zugehörige Datenübertragungswege an den Verbraucher 10 geschickt werden. Auch ein initiierender Anruf beim Verbraucher 10 durch das Call Center 5 ist möglich.

Ganz allgemein ist bei einem dem Aufbau von Fig. 1 entsprechenden Ausführungsbeispiel eines erfindungsgemäßen Systems, das zur Zählerstandserfassung bei einer Vielzahl von Verbrauchern dient, das System hinsichtlich der Ablesungsinitiierung im wesentlichen auf die Präferenzen der unterschiedlichen Verbrauchertypen abgestimmt. Intensive Internetuser werden per e-mail zur Zählerablesung und Rückmeldung aufgefordert, ganz junge Leute erhalten eine entsprechende Kurznachricht oder eine Multimedianachricht auf ihr Mobiltelefon, sehr alte Leute werden vom Kartendienstleistungszentrum 3 mit Selbstablesekarten versorgt, die meisten Verbraucher werden durch den Sprachcomputer 4 zur Zählerablesung und Rückmeldung aufgefordert, und eine kleine Gruppe von Verbrauchern erhält auf speziellen Wunsch ein Telefax mit der entsprechenden Nachricht. Für die Rückmeldung des Zählerstandes steht dann jedem Verbraucher 10 jeder beliebige der in Fig. 1 gezeigten Rückantwortkanäle offen. Der Verbraucher hat also die freie Auswahl. Er kann entweder den Sprachcomputer 4 oder das Call Center 5 anrufen, um den Zählerstand mitzuteilen, er kann aber auch wahlweise eine entsprechende e-mail, Kurznachricht oder Multimedianachricht oder ein Telefax absenden oder ein Internet-Eingabeformular ausfüllen und per Internet abschicken, oder er kann eine Postkarte mit der relevanten Information an das Kartendienstleistungszentrum 3 schicken.

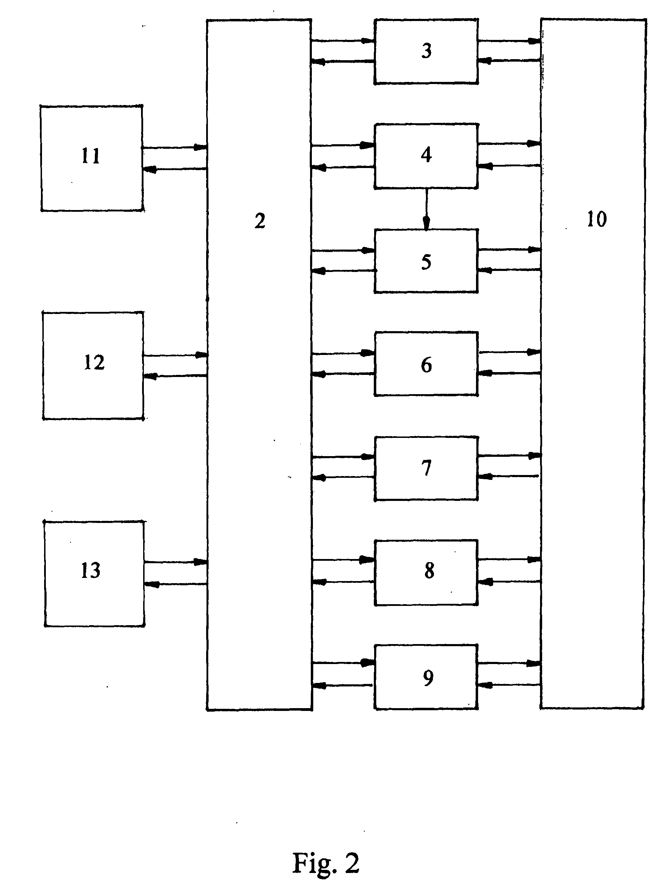

Fig. 2 zeigt ein schematisches Blockbild eines zweiten Ausführungsbeispiels eines erfindungsgemäßen Systems, das sich vom dem in Fig. 1 dargestellten Ausführungsbeispiel lediglich durch die Anzahl der beteiligten Versorger unterscheidet. Im Ausführungsbeispiel von Fig. 2 verwenden drei Versorger 11, 12, 13 gleichzeitig die Datenbank 2 sowie die an diese angeschlossenen weiteren Systemeinheiten 3 bis 9, die insoweit mit den entsprechenden Systemeinheiten 3 bis 9 aus Fig. 1 identisch sind, zur Zählerstandserfassung in Bezug auf unterschiedliche Zählertypen beim Verbraucher 10. So ist beispielsweise der erste Versorger 11 ein Elektroenergieversorger, der an der Zählerstandsablesung in Bezug auf einen Elektroenergiezähler beim Verbraucher 10 interessiert ist, während der zweite Versorger 12 ein Gasversorger ist, der den Zählerstand eines im Haus des Verbrauchers 10 installierten Gaszählers erfassen möchte, und schließlich der dritte Versorger 13 sich als Wasserversorger für den Zählerstand eines beim Verbraucher 10 installierten Wasserzählers interessiert.

Im Ausführungsbeispiel von Fig. 2 ist die Datenbank 2 so ausgelegt, daß sie unterschiedliche Datenzugriffsrechte an die einzelnen Versorger 11, 12, 13 derart gewährt, daß jeder Versorger 11, 12, 13 nur auf die für seine eigenen Erfassungs- und Auswertungsvorgänge relevanten Daten zugreifen kann.

Bei einem anderen Ausführungsbeispiel eines erfindungsgemäßen Systems werden die Datenbank 2 sowie die anderen Systemeinheiten 3 bis 9 (siehe oben) von mehreren Versorgern gleichen Typs zur Zählerstandserfassung in Bezug auf gleiche Zählertypen bei unterschiedlichen Verbrauchern benutzt. Bei wieder anderen Ausführungsbeispielen erfolgt die Nutzung durch mehrere Versorger gleichzeitig zur Zählerstandserfassung sowohl in Bezug auf unterschiedliche Zählertypen als auch in Bezug auf unterschiedliche Verbraucher mit gleichen Zählertypen.

Wie bereits oben kurz angedeutet wurde, müssen nicht in jedem Ausführungsbeispiel eines erfindungsgemäßen Systems alle der in den Fig. 1 bzw. 2 gezeigten Funktionen implementiert sein. Ausgehend von dem im Ausführungsbeispiel von Fig. 1 dargestellten, mit sehr vielfältigen Funktionen ausgestatteten Systembeispiel zeigen die Fig. 3 bis 8 Ausführungsbeispiele erfindungsgemäßer Systeme, die mit weniger Kommunikationskanälen ausgestattet sind. Ganz generell bezeichnen die in den Fig. 3 bis 8 verwendeten Bezugszeichen die gleichen Systemkomponenten, zu denen sie auch in den Fig. 1 und 2 gehören. Die Pfeile symbolisieren wiederum Informationsfluß und dessen Richtung. Somit sind die Fig. 3 bis 8 unter Berücksichtigung der oben zu Fig. 1 gemachten Ausführungen im wesentlichen selbsterklärend.

Bei einem Ausführungsbeispiel eines erfindungsgemäßen Systems, so wie es in Fig. 3 dargestellt ist, sind nur der Sprachcomputer 4 und das Call Center 5 zur Kommunikation mit dem Verbraucher 10 vorgesehen. Dabei kann, so wie es in Fig. 3 dargestellt ist, eine direkte Kommunikation sowohl zwischen dem Sprachcomputer 4 und dem Verbraucher 10 als auch zwischen dem Call Center 5 und dem Verbraucher 10 vorgesehen sein. Bei einem etwas modifizierten Ausführungsbeispiel ist eine direkte Kommunikation zwischen dem Verbraucher 10 und dem Call Center 5 bei normalem Verfahrensablauf nicht vorgesehen. Vielmehr geht bei dem letztgenannten Ausführungsbeispiel in jedem Falle die Initiative zur Zählerablesung, d. h. die Zählerablesungsaufforderung, von dem Sprachcomputer 4 aus, und der Verbraucher 10 muß für die Rückmeldung zunächst unbedingt den Sprachcomputer 4 telefonisch anwählen. Erst der Sprachcomputer 4 kann dann den Anruf des Verbrauchers 10 optional an das Call Center 5 weiterleiten, so wie es bereits oben mit Bezug auf das Ausführungsbeispiel von Fig. 1 ausführlich beschrieben wurde.

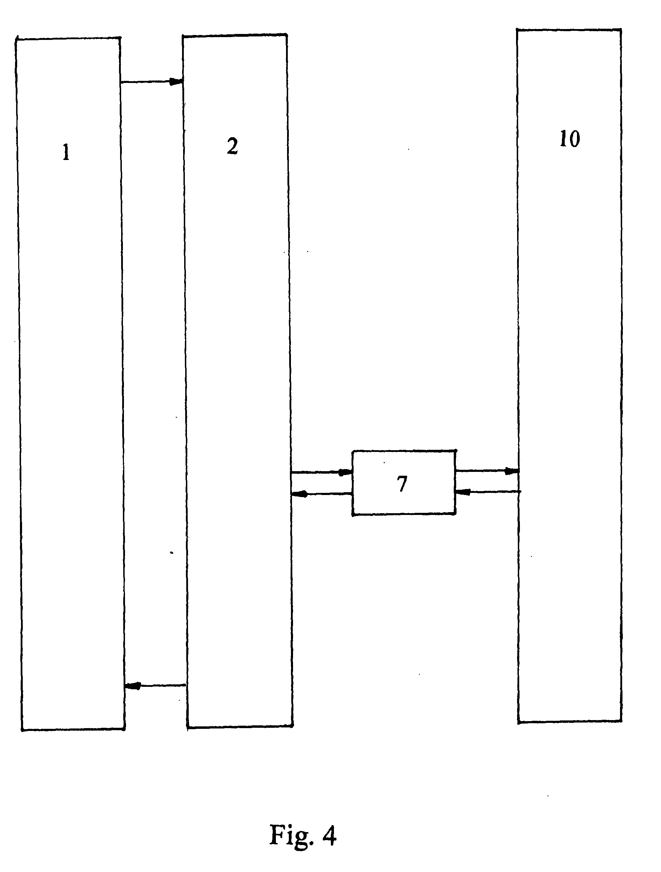

Bei dem Ausführungsbeispiel eines erfindungsgemäßen Systems gemäß Fig. 4 erfolgt die Kommunikation mit dem Verbraucher 10 ausschließlich über SMS. D.h., gesteuert durch die in der Datenbank 2 implementierte Steuerungslogik sendet das SMS Center 7 eine Kurzmitteilung an den Verbraucher 10 mit der Aufforderung, den Zähler abzulesen und den Zählerstand per Kurzmitteilung, etwa über einen Mobilfunkdatendienst oder über den Dienst "SMS im Festnetz", zurückzumelden.

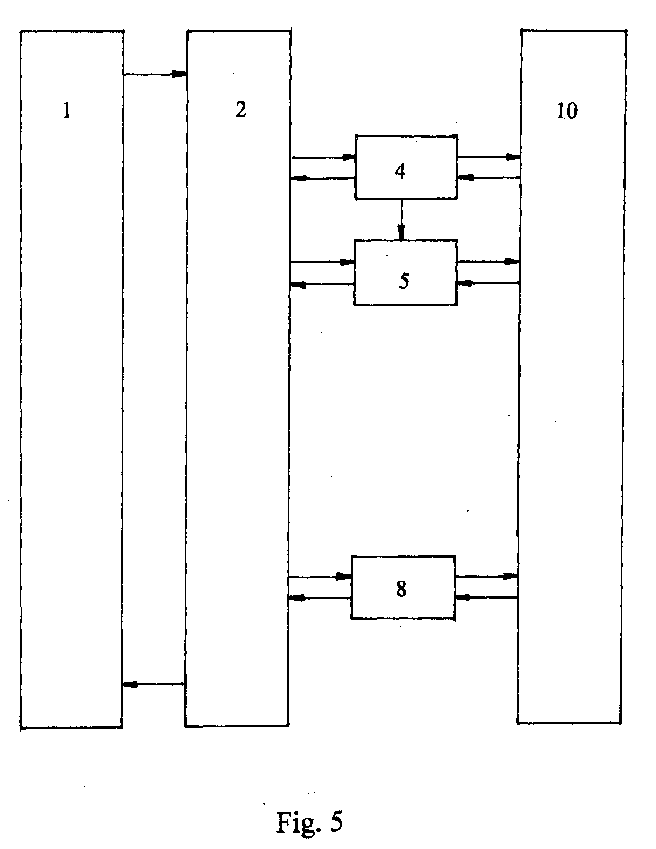

Ein in Fig. 5 dargestelltes Ausführungsbeispiel eines erfindungsgemäßen Systems entspricht dem mit Bezug auf die Fig. 3 beschriebenen Ausführungsbeispiel eines erfindungsgemäßen Systems ergänzt durch die Möglichkeit der Kommunikation mittels Multimedianachricht über das MMS Center 8. Ein unter Nutzung des in Fig. 5 dargestellten Ausführungsbeispiels eines erfindungsgemäßen Systems ablaufendes Verfahren zur Zählerstandserfassung kann beispielsweise derart vonstatten gehen, daß der Sprachcomputer 4, gesteuert durch die in der Datenbank 2 implementierte Steuerungslogik, den Verbraucher 10 über ein Telefonnetz anruft und auffordert, den Stand eines bestimmten Zählers abzulesen und zurückzumelden, wobei der Sprachcomputer 4 dem Verbraucher 10 gleichzeitig drei verschiedene Rückmeldungsmöglichkeiten mit der jeweils zugehörigen Telefonnummer angibt, nämlich Rückmeldung über Anruf des Sprachcomputers 4, Rückmeldung über Anruf des Call Centers 5 oder Rückmeldung per MMS.

Der Verbraucher 10 kann dann den von ihm bevorzugten Rückmeldungskanal auswählen und über diesen seine Rückmeldung des Zählerstandes tätigen. Beispielsweise hat der Verbraucher 10 bei dem in Fig. 5 dargestellten Ausführungsbeispiel des erfindungsgemäßen Systems die Möglichkeit, ein von ihm mit seinem MMS-Handy aufgenommenes Foto des Zählerskalenstandes per MMS an das MMS Center 8 zu schicken. Das MMS Center 8 ist so eingerichtet, daß es derartige Fotos automatisch verarbeitet, die relevanten Daten aus der entsprechenden Multimedianachricht in ein für die Weiterverarbeitung durch die Datenbank 2 geeignetes Datenformat umsetzt und die derart aufbereiteten Daten über eine Internetverbindung an die Datenbank 2 schickt. Dort erfolgt dann, wie bereits oben mit Bezug auf die Fig. 1 ausführlich beschrieben, eine automatisierte Plausibilitätsprüfung der Zählerstandsdaten. Falls die erfaßten Zählerstandsdaten plausibel erscheinen, werden sie in der Datenbank 2 sowohl gespeichert als auch von einer in der Datenbank 2 implementierten Software für Abrechnungs- und Statistikzwecke weiterverarbeitet. Die dann so weiter aufbereiteten Daten werden schließlich, wiederum über eine Internetverbindung, an den Versorger 1 übertragen. Falls die genannte Plausibilitätsprüfung jedoch ergeben haben sollte, daß die erfaßten Zählerstandsdaten unplausibel erscheinen, so informiert die Datenbank 2 automatisch über eine Internetverbindung, z.B. per e-mail, das Call Center 5 und initiiert auf die Weise eine entsprechende telefonische Rückfrage beim Verbraucher 10 durch das Call Center 5.

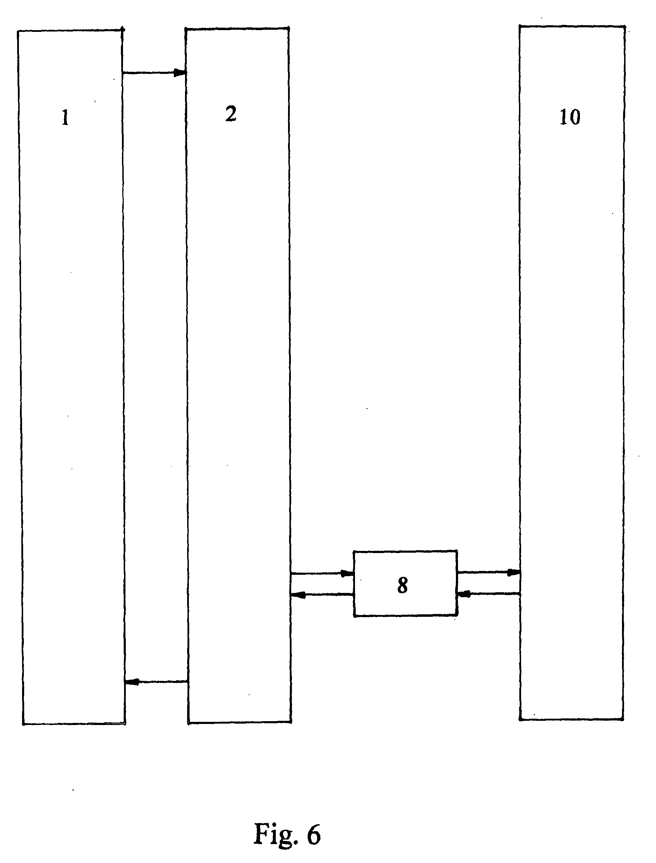

Das in Fig. 6 dargestellte Ausführungsbeispiel eines erfindungsgemäßen Systems ist sehr ähnlich dem in Fig. 4 gezeigten Ausführungsbeispiel aufgebaut, wobei der wesentliche Unterschied darin besteht, daß anstelle der im Ausführungsbeispiel von Fig. 4 vorgesehenen Kommunikation per SMS über das SMS Center 7 nun im Ausführungsbeispiel von Fig. 6 eine Kommunikation per MMS über das MMS Center 8 vorgesehen ist. Dabei versendet das MMS Center 8, gesteuert durch die in der Datenbank 2 implementierte Steuerungslogik, eine Aufforderung zur Zählerstandsablesung an den Verbraucher 10. Die Rückmeldung des Zählerstandes kann dann beispielsweise genau so ablaufen, wie es im vorangegangenen Absatz beschrieben wurde.

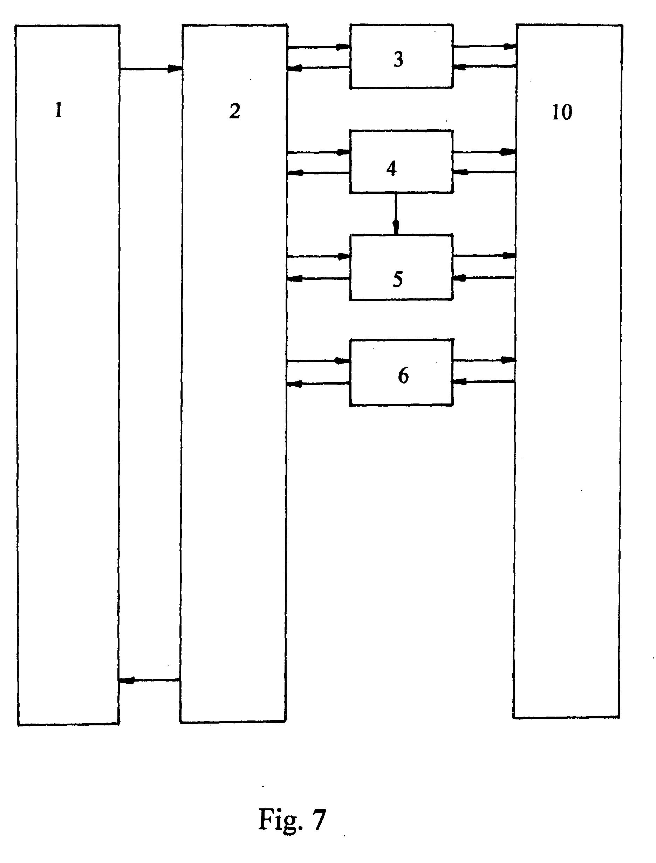

Das in Fig. 7 dargestellte Ausführungsbeispiel eines erfindungsgemäßen Systems ist eine nur geringfügig reduzierte Abwandlung des in Fig. 1 dargestellten Ausführungsbeispiels. Zwar verzichtet das in Fig. 7 dargestellte Ausführungsbeispiel eines erfindungsgemäßen Systems auf die Kommunikationskanäle SMS, MMS und Telefax, jedoch sind wie bei dem Ausführungsbeispiel von Fig. 1 das Kartendienstleistungszentrum 3, der Sprachcomputer 4, das Call Center 5 und das Internetservicecenter 6 vorhanden. Alle diese letztgenannten Einheiten 3 bis 6 können je nach Versorger- und Kundenpräferenz in einer Vielzahl von Variationsmöglichkeiten zur Durchführung verschiedener Ausführungsbeispiele eines erfindungsgemäßen Verfahrens eingesetzt werden. In diesem Zusammenhang sei ausdrücklich auf die entsprechenden obigen Erläuterungen zum Ausführungsbeispiel von Fig. 1 verwiesen, die ganz entsprechend für das Ausführungsbeispiel von Fig. 7 gültig sind, sofern man beachtet, daß bei dem Ausführungsbeispiel von Fig. 7 die Kommunikationskanäle SMS, MMS und Telefax nicht verfügbar sind.

Beispielsweise kann eine Zählerstandserfassung unter Verwendung des in Fig. 7 dargestellten Ausführungsbeispiels eines erfindungsgemäßen Systems so ablaufen, daß, gesteuert durch eine in der Datenbank 2 vorhandene Steuerungslogik, das Kartendienstleistungszentrum 3 automatisiert personalisierte Selbstablesekarten für den bzw. die Verbraucher 10 druckt, auf denen darauf hingewiesen wird, daß der Verbraucher 10 neben der Rücksendemöglichkeit der ausgefüllten Karte per Post auch die Möglichkeit der telefonischen Übermittlung des Zählerstandes und die Möglichkeit der Ausfüllung eines über das Internet abrufbaren Internet-Eingabeformulars hat und zwischen diesen Möglichkeiten beliebig wählen kann. Entscheidet sich der Verbraucher 10 für die Rückmeldung der Daten über das Internet-Eingabeformular, so sucht er mit Hilfe seines Homecomputers die entsprechende Internetseite auf, füllt das Internet-Eingabeformular auf elektronischem Wege aus und sendet es per Internet an das Internetservicecenter 6 ab. Von dort werden die Zählerstandsdaten, ggf. nach einer Umformatierung oder einer anderen Rohbearbeitung, per Internet an die Datenbank 2 weitergeleitet, wo dann weitere Datenverarbeitungsschritte folgen, so wie es bereits oben, z.B. mit Bezug auf das Ausführungsbeispiel von Fig. 5, ausführlich beschrieben wurde.

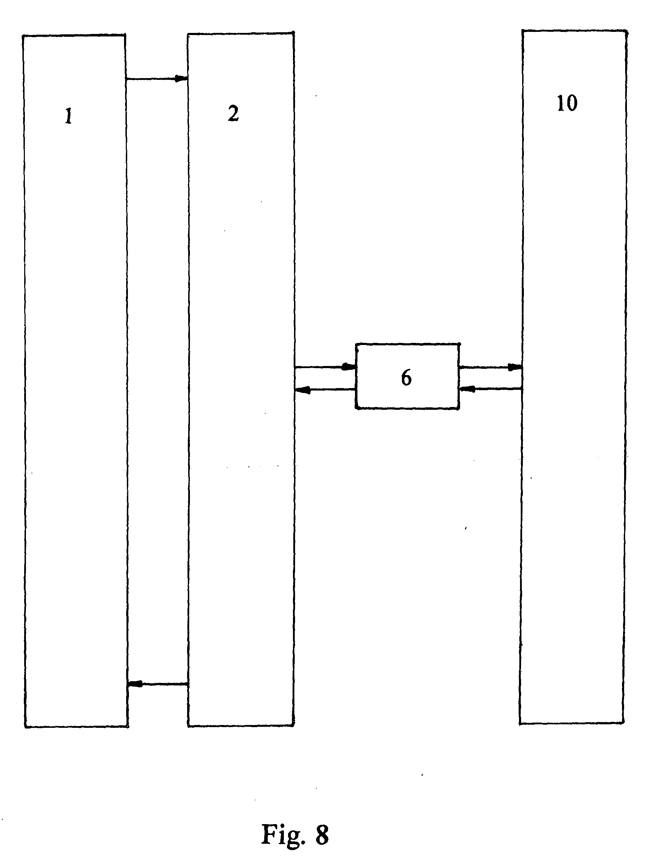

Bei dem in Fig. 8 dargestellten Ausführungsbeispiel eines erfindungsgemäßen Systems ist als Kommunikationsweg ausschließlich das Internet vorgesehen. Gesteuert durch eine in der Datenbank 2 implementierte Steuerungslogik versendet das Internetservicecenter 6 an den Verbraucher 10 eine e-mail mit der Aufforderung, den Zählerstand eines bestimmten Zählers abzulesen und per e-mail oder per Internet-Eingabeformular zurückzumelden. Die Rückmeldung durch den Verbraucher 10 kann dann beispielsweise so erfolgen, wie es im vorangegangenen Absatz mit Bezug auf das Ausführungsbeispiel von Fig. 7 beschrieben wurde.

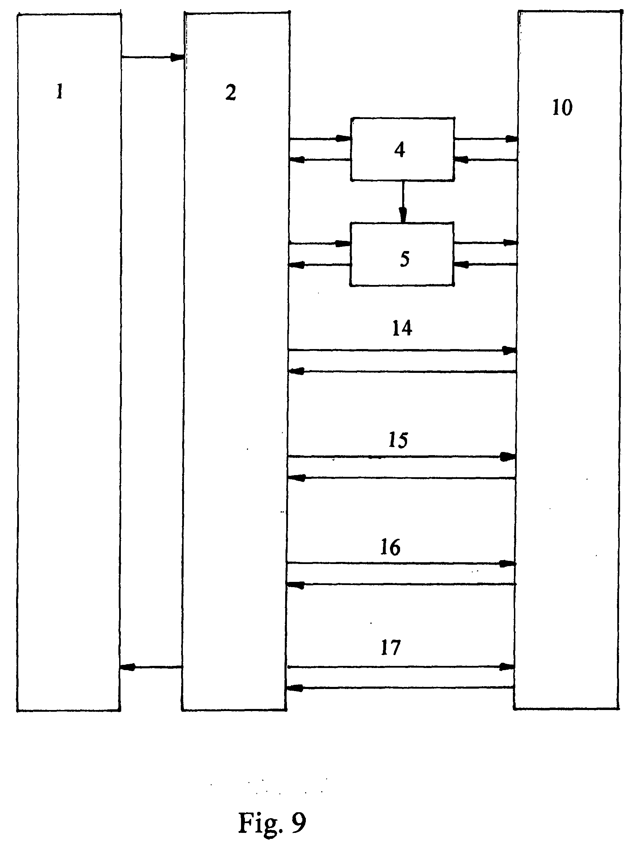

Wie ebenfalls bereits weiter oben angedeutet wurde, gibt es ferner Ausführungsbeispiele eines erfindungsgemäßen Systems, bei denen die Datenbank 2 softwaremäßig und hardwaremäßig so eingerichtet ist, daß sie unmittelbar über das Internet und/oder über SMS und/oder über MMS und/oder per Telefax mit dem Verbraucher 10 kommunizieren kann. Ein solches Ausführungsbeispiel eines erfindungsgemäßen Systems ist in Fig. 9 dargestellt. Dabei bezeichnet das Bezugszeichen 14 den Internetkommunikationskanal, das Bezugszeichen 15 den SMS-Kommunikationskanal, das Bezugszeichen 16 den MMS-Kommunikationskanal und das Bezugszeichen 17 den Telefaxkommunikationskanal.

Für die Durchführung von Ausführungsbeispielen erfindungsgemäßer Verfahren ändert sich aufgrund der etwas anderen prinzipiellen Hardwarestruktur des erfindungsgemäßen Systems bei diesem System-Ausführungsbeispiel jedoch nichts. Gesteuert durch die in der Datenbank 2 implementierte Steuerungslogik ruft der Sprachcomputer 4 den Verbraucher 10 telefonisch an, fordert ihn auf, den Zählerstand eines bestimmten Zählers abzulesen und diesen dann zurückzumelden. Dabei informiert der Sprachcomputer 4 den Verbraucher 10 gleichzeitig über die verschiedenen zur Auswahl stehenden Rückmeldungskanäle, nämlich Telefonanruf an den Sprachcomputer 4 oder an das Call Center 5, e-mail oder Internet-Eingabeformular über das Internet 14, SMS 15, MMS 16 und Telefax 17. Der Verbraucher 10 meldet den Zählerstand nach dessen Ablesung über den von ihm bevorzugten Kommunikationskanal, beispielsweise per e-mail über das Internet 14, zurück. Im Ausführungsbeispiel von Fig. 9 wird dabei die vom Verbraucher 10 abgesetzte e-mail direkt, d.h. ohne den Umweg über ein Intemetservicecenter zu nehmen, an die Datenbank 2 geleitet und dort in Bezug auf die relevanten Daten weiterverarbeitet. Entsprechend direkt würde bei dem Ausführungsbeispiel von Fig. 9 auch eine Kurznachricht, eine Multimedianachricht oder eine Telefaxnachricht mit dem Zählerstand vom Verbraucher 10 bei der Datenbank 2 einlaufen und dort weiterverarbeitet werden, wenn sich der Verbraucher 10 für die Zählerstandsrückmeldung über einen der drei letztgenannten Kommunikationskanäle entscheiden würde.

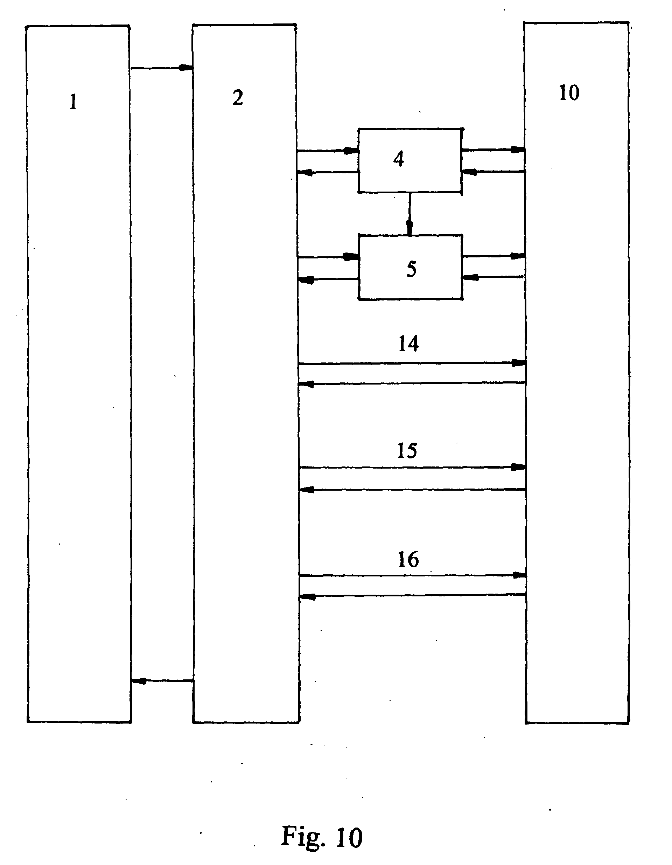

Das in Fig. 10 dargestellte Ausführungsbeispiel eines erfindungsgemäßen Systems entspricht weitgehend dem in Fig. 9 dargestellten Ausführungsbeispiel mit dem wesentlichen Unterschied, daß bei dem Ausführungsbeispiel von Fig. 10 keine Telefaxkommunikation 17 zwischen dem Verbraucher 10 und der Datenbank 2 vorgesehen ist.

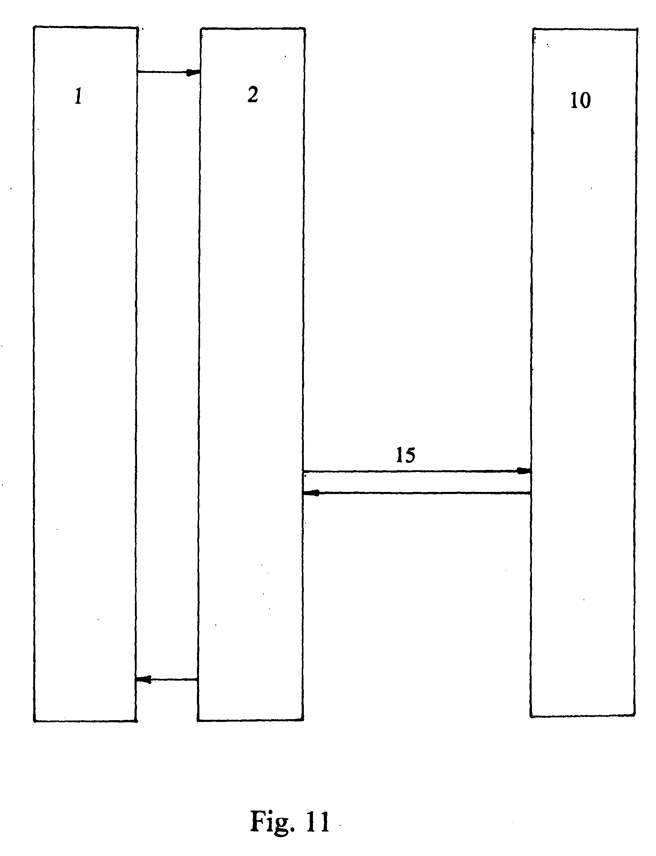

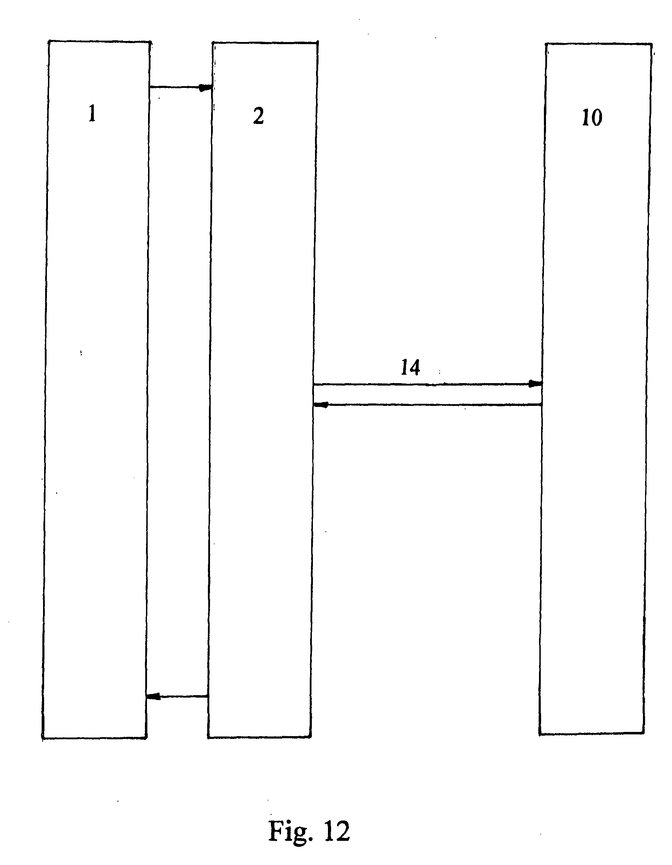

Die in den Fig. 11 bzw. 12 dargestellten Ausführungsbeispiele eines erfindungsgemäßen Systems entsprechen weitgehend den in den Fig. 4 bzw. 8 dargestellten Ausführungsbeispielen eines erfindungsgemäßen Systems, wobei der wesentliche Unterschied darin besteht, daß bei den Ausführungsbeispielen von Fig. 11 bzw. 12 die Kommunikation zwischen Verbraucher 10 und Datenbank 2 über SMS 15 bzw. Internet 14 unmittelbar erfolgt.

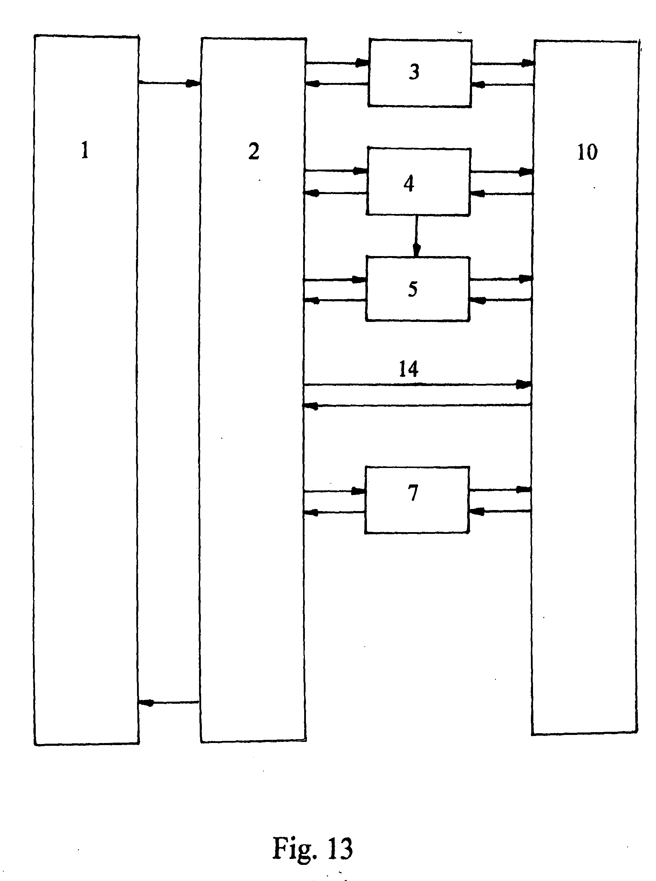

Das in Fig. 13 dargestellte Ausführungsbeispiel eines erfindungsgemäßen Systems entspricht weitgehend dem in Fig. 7 dargestellten Ausführungsbeispiel, jedoch ergänzt um die Möglichkeit der SMS-Kommunikation zwischen der Datenbank 2 und dem Verbraucher 10 über ein SMS Center 7. Ein weiterer Unterschied zu dem Ausführungsbeispiel von Fig. 7 besteht darin, daß bei dem Ausführungsbeispiel des erfindungsgemäßen Systems gemäß Fig. 13 die Datenbank 2 so ausgelegt ist, daß sie mit dem Verbraucher 10 über das Internet 14 unmittelbar kommunizieren kann.

Ausgehend von den in den Fig. 1 bis 13 dargestellten Ausführungsbeispielen erfindungsgemäßer Systeme sind viele weitere Kombinationsmöglichkeiten der einzelnen Kommunikationswege denkbar. Darüber hinaus ist es auch möglich, die in den Fig. 3 bis 13 für die Anwendung durch nur einen einzigen Versorger 1 gezeigte Systemstruktur auch auf die Anwendung durch mehrere Versorger 11, 12, 13, wie sie im Ausführungsbeispiel von Fig. 2 vorkommen, zu übertragen. Der prinzipielle Aufbau der jeweiligen Ausführungsbeispiele erfindungsgemäßer Systeme zwischen Datenbank 2 und Verbraucher 10 wird dadurch nicht berührt. Insoweit sei auch auf die entsprechenden obigen Ausführungen zu Fig. 2 verwiesen.

### Bezugszeichenliste

- 1: Versorger
- 2: Datenbank
- 3: Kartendienstleistungszentrum
- 4: Sprachcomputer
- 5: Call Center
- 6: Internetservicecenter
- 7: SMS Center
- 8: MMS Center
- 9: Telefaxcenter
- 11: Elektroenergieversorger
- 12: Gasversorger
- 13: Wasserversorger
- 14: Internetkommunikationskanal
- 15: SMS-Kommunikationskanal
- 16: MMS-Kommunikationskanal
- 17: Telefaxkommunikationskanal

## Patentansprüche

1. Verfahren zur Zählerstandserfassung, bei dem ein Verbraucher (10) aufgefordert wird, den Stand eines bestimmten Zählers abzulesen und rückzumelden, **dadurch gekennzeichnet, daß** die initiierende Aufforderung an den Verbraucher (10) auf telefonischem Wege durch einen Sprachcomputer (4) erfolgt.

2. Verfahren zur Zählerstandserfassung, bei dem ein Verbraucher (10) aufgefordert wird, den Stand eines bestimmten Zählers abzulesen und rückzumelden, **dadurch gekennzeichnet, daß** die initiierende Aufforderung an den Verbraucher (10) mittels eines Mobilfunkdatendienstes erfolgt.

3. Verfahren nach Anspruch 2, **dadurch gekennzeichnet, daß** die initiierende Aufforderung an den Verbraucher (10) mittels eines UMTS-Mobilfunkdatendienstes erfolgt.

4. Verfahren nach Anspruch 2 oder nach Anspruch 3, **dadurch gekennzeichnet, daß** die initiierende Aufforderung an den Verbraucher (10) mittels SMS (15) oder MMS (16) erfolgt.

5. Verfahren zur Zählerstandserfassung, bei dem ein Verbraucher (10) aufgefordert wird, den Stand eines bestimmten Zählers abzulesen und rückzumelden, **dadurch gekennzeichnet, daß** die initiierende Aufforderung an den Verbraucher (10) per e-mail erfolgt.

6. Verfahren zur Zählerstandserfassung, bei dem ein Verbraucher (10) aufgefordert wird, den Stand eines bestimmten Zählers abzulesen und rückzumelden, **dadurch gekennzeichnet, daß** die initiierende Aufforderung an den Verbraucher (10) per SMS im Festnetz erfolgt.

7. Verfahren zur Zählerstandserfassung, bei dem ein Verbraucher (10) aufgefordert wird, den Stand eines bestimmten Zählers abzulesen und rückzumelden, **dadurch gekennzeichnet, daß** die initiierende Aufforderung an den Verbraucher (10) per Telefax (17) erfolgt.

8. Verfahren nach einem der vorhergehenden Ansprüche, **dadurch gekennzeichnet, daß** die genannte initiierende Aufforderung an den Verbraucher (10) automatisiert erzeugt wird.

9. Verfahren zur Zählerstandserfassung, bei dem ein Verbraucher (10) aufgefordert wird, den Stand eines bestimmten Zählers abzulesen und rückzumelden, **dadurch gekennzeichnet, daß** die Rückmeldung des Zählerstandes durch den Verbraucher (10) mittels eines Mobilfunkdatendienstes erfolgt.

10. Verfahren zur Zählerstandserfassung, bei dem ein Verbraucher (10) aufgefordert wird, den Stand eines bestimmten Zählers abzulesen und rückzumelden, **dadurch gekennzeichnet, daß** die Rückmeldung des Zählerstandes durch den Verbraucher (10) mittels SMS im Festnetz erfolgt.

11. Verfahren zur Zählerstandserfassung, bei dem ein Verbraucher (10) aufgefordert wird, den Stand eines bestimmten Zählers abzulesen und rückzumelden, **dadurch gekennzeichnet, daß** die Rückmeldung des Zählerstandes durch den Verbraucher (10) über ein Telefonnetz an einen Sprachcomputer (4) erfolgt.

12. Verfahren zur Zählerstandserfassung, bei dem ein Verbraucher (10) aufgefordert wird, den Stand eines bestimmten Zählers abzulesen und rückzumelden, **dadurch gekennzeichnet, daß** die Rückmeldung des Zählerstandes durch den Verbraucher (10) über das Internet (14) erfolgt.

13. Verfahren zur Zählerstandserfassung, bei dem ein Verbraucher (10) aufgefordert wird, den Stand eines bestimmten Zählers abzulesen und rückzumelden, **dadurch gekennzeichnet, daß** die Rückmeldung des Zählerstandes durch den Verbraucher (10) per Telefax (17) erfolgt.

14. Verfahren nach einem der Ansprüche 1 bis 8, **dadurch gekennzeichnet, daß** die Rückmeldung des Zählerstandes durch den Verbraucher (10) über ein Telefonnetz an einen Sprachcomputer (4) erfolgt.

15. Verfahren nach Anspruch 11 oder Anspruch 14, **dadurch gekennzeichnet, daß** im Falle einer Störung des Sprachcomputers (4) oder auf Wunsch des Verbrauchers (10) der ursprünglich an den Sprachcomputer (4) gerichtete Anruf des Verbrauchers (10) an ein Call Center (5) weitergeleitet wird.

16. Verfahren nach einem der Ansprüche 1 bis 8, **dadurch gekennzeichnet, daß** die Rückmeldung des Zählerstandes durch den Verbraucher (10) mittels eines Mobilfunkdatendienstes erfolgt.

17. Verfahren nach Anspruch 9 oder nach Anspruch 16, **dadurch gekennzeichnet, daß** die Rückmeldung des Zählerstandes durch den Verbraucher (10) mittels eines UMTS-Mobilfunkdatendienstes erfolgt.

18. Verfahren nach Anspruch 9 oder nach Anspruch 16 oder nach Anspruch 17, **dadurch gekennzeichnet, daß** die Rückmeldung des Zählerstandes durch den Verbraucher (10) mittels SMS (15) oder MMS (16) erfolgt.

19. Verfahren nach einem der Ansprüche 1 bis 8, **dadurch gekennzeichnet, daß** die Rückmeldung des Zählerstandes durch den Verbraucher (10) über das Internet (14) erfolgt.

20. Verfahren nach Anspruch 12 oder nach Anspruch 19, **dadurch gekennzeichnet, daß** die Rückmeldung des Zählerstandes durch den Verbraucher (10) per e-mail oder per Internet-Eingabeformular erfolgt.

21. Verfahren nach einem der Ansprüche 1 bis 8, **dadurch gekennzeichnet, daß** die Rückmeldung des Zählerstandes durch den Verbraucher (10) mittels SMS im Festnetz erfolgt.

22. Verfahren nach einem der Ansprüche 1 bis 8, **dadurch gekennzeichnet, daß** die Rückmeldung des Zählerstandes durch den Verbraucher (10) per Telefax (17) erfolgt.

23. System zur Erfassung eines Zählerstandes eines bei einem Verbraucher (10) installierten Zählers, welcher Leistungen eines Versorgers (1, 11, 12, 13) mißt, **gekennzeichnet durch** einen Sprachcomputer (4) zur Kommunikation mit dem Verbraucher (10).

24. System nach Anspruch 23, **dadurch gekennzeichnet, daß** der Sprachcomputer (4) so ausgelegt ist, daß er auf telefonischem Wege eine initiierende Aufforderung an den Verbraucher (10) richten kann, mittels welcher der Verbraucher (10) aufgefordert wird, den Zählerstand abzulesen und zurückzumelden.

25. System nach Anspruch 23 oder Anspruch 24, ferner **gekennzeichnet durch** ein Call Center (5) zur Kommunikation mit dem Verbraucher (10).

26. System nach Anspruch 25, **dadurch gekennzeichnet, daß** der Sprachcomputer so ausgelegt ist, daß er optional einen Anruf vom Verbraucher (10) an das Call Center (5) weiterleiten kann.

27. System zur Erfassung eines Zählerstandes eines bei einem Verbraucher (10) installierten Zählers, welcher Leistungen eines Versorgers (1, 11, 12, 13) mißt, **gekennzeichnet durch** ein Internetservicecenter (6) zur Kommunikation mit dem Verbraucher (10).

28. System zur Erfassung eines Zählerstandes eines bei einem Verbraucher (10) installierten Zählers, welcher Leistungen eines Versorgers (1, 11, 12, 13) mißt, **gekennzeichnet durch** ein SMS Center (7) zur Kommunikation mit dem Verbraucher (10).

29. System zur Erfassung eines Zählerstandes eines bei einem Verbraucher (10) installierten Zählers, welcher Leistungen eines Versorgers (1, 11, 12, 13) mißt, **gekennzeichnet durch** ein MMS Center (8) zur Kommunikation mit dem Verbraucher (10).

30. System zur Erfassung eines Zählerstandes eines bei einem Verbraucher (10) installierten Zählers, welcher Leistungen eines Versorgers (1, 11, 12, 13) mißt, **gekennzeichnet durch** ein Telefaxcenter (9) zur Kommunikation mit dem Verbraucher (10).

31. System nach einem der Ansprüche 23 bis 26 oder 28 bis 30, ferner **gekennzeichnet durch** ein Internetservicecenter (6) zur Kommunikation mit dem Verbraucher (10).

32. System nach einem der Ansprüche 23 bis 27 oder 29 bis 31, ferner **gekennzeichnet durch** ein SMS Center (7) zur Kommunikation mit dem Verbraucher (10).

33. System nach einem der Ansprüche 23 bis 28 oder 30 bis 32, ferner **gekennzeichnet durch** ein MMS Center (8) zur Kommunikation mit dem Verbraucher (10).

34. System nach einem der Ansprüche 23 bis 29 oder 31 bis 33, ferner **gekennzeichnet durch** ein Telefaxcenter (9) zur Kommunikation mit dem Verbraucher (10).

35. System nach Anspruch 27 oder nach Anspruch 31, **dadurch gekennzeichnet, daß** das Internetservicecenter (6) so ausgelegt ist, daß es per e-mail eine initiierende Aufforderung an den Verbraucher (10) richten kann, mittels welcher der Verbraucher (10) aufgefordert wird, den Zählerstand abzulesen und zurückzumelden.

36. System nach Anspruch 28 oder nach Anspruch 32, **dadurch gekennzeichnet, daß** das SMS Center (7) so ausgelegt ist, daß es per Kurzmitteilung über das Festnetz und/oder über einen Mobilfunkdatendienst eine initiierende Aufforderung an den Verbraucher (10) richten kann, mittels welcher der Verbraucher (10) aufgefordert wird, den Zählerstand abzulesen und zurückzumelden.

37. System nach Anspruch 29 oder nach Anspruch 33, **dadurch gekennzeichnet, daß** das MMS Center (8) so ausgelegt ist, daß es per Multimedianachricht über einen Mobilfunkdatendienst eine initiierende Aufforderung an den Verbraucher (10) richten kann, mittels welcher der Verbraucher (10) aufgefordert wird, den Zählerstand abzulesen und zurückzumelden.

38. System nach Anspruch 30 oder nach Anspruch 34, **dadurch gekennzeichnet, daß** das Telefaxcenter (9) so ausgelegt ist, daß es per Telefax eine initiierende Aufforderung an den Verbraucher (10) richten kann, mittels welcher der Verbraucher (10) aufgefordert wird, den Zählerstand abzulesen und zurückzumelden.

39. System nach einem der Ansprüche 27 bis 38, ferner **gekennzeichnet durch** ein Call Center (5) zur Kommunikation mit dem Verbraucher (10).

40. System nach einem der Ansprüche 23 bis 39, ferner **gekennzeichnet durch** ein Kartendienstleistungszentrum (3) zur Kommunikation mit dem Verbraucher (10).

41. System nach einem der Ansprüche 23 bis 40, **gekennzeichnet durch** eine Datenbank (2), die
- im Datenkommunikationsweg zwischen dem Versorger (1, 11, 12, 13) einerseits und einer oder mehrerer der folgenden Einheiten andererseits angeordnet ist:
- Kartendienstleistungszentrum (3) und/oder
- Sprachcomputer (4) und/oder
- Call Center (5) und/oder
- Internetservicecenter (6) und/oder
- SMS Center (7) und/oder
- MMS Center (8) und/oder
- Telefaxcenter (9),
- so ausgelegt ist, daß sie sowohl von mindestens einer dieser letztgenannten Einheiten (3 bis 9) als auch von dem Versorger (1, 11, 12, 13) Daten empfangen kann,
- so ausgelegt ist, daß sie sowohl an mindestens eine der genannten Einheiten (3 bis 9) als auch an den Versorger (1, 11, 12, 13) Daten liefern kann und
- mit einer Steuerlogik zur Überwachung und Steuerung zumindest eines Teils des Datentransfers des Systems versehen ist.

42. System nach Anspruch 41, **dadurch gekennzeichnet, daß** der Datentransfer zumindest teilweise über Internet-Anwendungen abgewickelt wird.

43. System nach Anspruch 41 oder nach Anspruch 42, das ein Telefaxcenter (9) aufweist, **dadurch gekennzeichnet, daß** das Telefaxcenter (9) so ausgelegt ist, daß in dem Telefaxcenter (9) vom Verbraucher (10) eingehende Telefaxe gescannt, d.h. digitalisiert, und dann die für den weiteren Erfassungs- und Abrechnungsprozeß relevanten Daten aus dem gescannten Image digital weiterverarbeitet werden.

44. System nach Anspruch 43, **dadurch gekennzeichnet, daß** das Telefaxcenter (9) so ausgelegt ist, daß es die Zählerdaten sowohl im Datenbankformat als auch als Image an die Datenbank (2) übertragen kann.

45. System nach einem der Ansprüche 41 bis 44, **dadurch gekennzeichnet, daß** die Datenbank (2) so ausgelegt ist, daß eine direkte Telefaxkommunikation (17) zwischen der Datenbank (2) und dem Verbraucher (10) möglich ist.

46. System nach einem der Ansprüche 41 bis 45, **dadurch gekennzeichnet, daß** die Datenbank (2) so ausgelegt ist, daß eine direkte Kommunikation zwischen der Datenbank (2) und dem Verbraucher (10) über das Internet (14) und/oder per SMS (15) und/oder per MMS (16) möglich ist.

47. System nach einem der Ansprüche 23 bis 40, **gekennzeichnet durch** eine Datenbank (2), die
- im Datenkommunikationsweg zwischen dem Versorger (1, 11, 12, 13) einerseits und dem Verbraucher (10) andererseits angeordnet ist und so ausgelegt ist, daß sie mit beiden kommunizieren kann,
- ferner so ausgelegt ist, daß eine direkte Kommunikation zwischen der Datenbank (2) und dem Verbraucher (10) über das Internet (14) und/oder per SMS (15) und/oder per MMS (16) und/oder per Telefax (17) möglich ist und
- mit einer Steuerlogik zur Überwachung und Steuerung zumindest eines Teils des Datentransfers des Systems versehen ist.

48. System nach Anspruch 47, **dadurch gekennzeichnet, daß** die Datenbank (2) so ausgelegt ist, daß sie ferner mit einer oder mehrerer der folgenden Einheiten kommunizieren kann:
- Kartendienstleistungszentrum (3) und/oder
- Sprachcomputer (4) und/oder
- Call Center (5).

49. System nach einem der Ansprüche 41 bis 46 oder nach Anspruch 48, das ein Kartendienstleistungszentrum (3) aufweist, **dadurch gekennzeichnet, daß** das Kartendienstleistungszentrum (3) so ausgelegt ist, daß in dem Kartendienstleistungszentrum (3) vom Verbraucher (10) eingehende Karten gescannt, d.h. digitalisiert, und dann die für den weiteren Erfassungs- und Abrechnungsprozeß relevanten Daten aus dem gescannten Image digital weiterverarbeitet werden.

50. System nach Anspruch 49, **dadurch gekennzeichnet, daß** das Kartendienstleistungszentrum (3) so ausgelegt ist, daß es die Zählerdaten sowohl im Datenbankformat als auch als Image an die Datenbank (2) übertragen kann.

51. System nach Anspruch 43 oder nach Anspruch 44 oder nach Anspruch 49 oder nach Anspruch 50, **dadurch gekennzeichnet, daß** es so ausgelegt ist, daß das Scannen und die digitale Weiterverarbeitung des gescannten Image automatisiert erfolgen

52. System nach einem der Ansprüche 41 bis 51, **dadurch gekennzeichnet, daß** die Datenbank (2) und die, soweit vorhanden, im Kommunikationsweg verbraucherseitig an sie angeschlossenen Systemeinheiten (3 bis 9) von mehreren Versorgern (11, 12, 13) gleichzeitig zur Zählerstandserfassung in Bezug auf unterschiedliche Zählertypen und/oder in Bezug auf unterschiedliche Verbraucher benutzt werden und daß die Datenbank (2) so ausgelegt ist, daß sie die Vergabe unterschiedlicher Datenzugriffsrechte an die einzelnen Verbraucher (11, 12, 13) ermöglicht.

53. System nach einem der Ansprüche 23 bis 52, **dadurch gekennzeichnet, daß** als ein Kommunikationsweg zur Rückmeldung des Zählerstandes durch den Verbraucher (10) die Verwendung eines Mobilfunkdatendienstes vorgesehen ist.

54. System nach einem der Ansprüche 23 bis 53, **dadurch gekennzeichnet, daß** als ein Kommunikationsweg zur Initiierung der Zählerstandsablesung durch den Verbraucher (10) die Verwendung eines Mobilfunkdatendienstes vorgesehen ist.

55. System nach Anspruch 53 oder nach Anspruch 54, **dadurch gekennzeichnet, daß** der Mobilfunkdatendienst ein UMTS-Mobilfunkdatendienst ist.

56. System nach einem der Ansprüche 53 bis 55, **dadurch gekennzeichnet, daß** als Mobilfunkdatendienst SMS (15) und/oder MMS (16) vorgesehen sind bzw. ist.

57. System nach einem der Ansprüche 23 bis 56, **dadurch gekennzeichnet, daß** als ein Kommunikationsweg zur Rückmeldung des Zählerstandes durch den Verbraucher (10) die Verwendung des Dienstes "SMS im Festnetz" vorgesehen ist.

58. System nach einem der Ansprüche 23 bis 57, **dadurch gekennzeichnet, daß** als ein Kommunikationsweg zur Rückmeldung des Zählerstandes durch den Verbraucher (10) die Verwendung des Internet (14) vorgesehen ist.

59. System nach Anspruch 58, **dadurch gekennzeichnet, daß** als ein Kommunikationsweg zur Rückmeldung des Zählerstandes durch den Verbraucher (10) die Verwendung von e-mail und/oder die Verwendung eines Internet-Eingabeformulars vorgesehen ist.

60. System nach einem der Ansprüche 23 bis 59, **dadurch gekennzeichnet, daß** als ein Kommunikationsweg zur Rückmeldung des Zählerstandes durch den Verbraucher (10) eine Kommunikation des Verbrauchers (10) über ein Telefonnetz mit einem Sprachcomputer (4) vorgesehen ist.

61. System nach einem der Ansprüche 23 bis 60, **dadurch gekennzeichnet, daß** als ein Kommunikationsweg zur Rückmeldung des Zählerstandes durch den Verbraucher (10) eine Kommunikation des Verbrauchers (10) über ein Telefonnetz mit einem Call Center (5) vorgesehen ist.

62. System nach einem der Ansprüche 23 bis 61, **dadurch gekennzeichnet, daß** als ein Kommunikationsweg zur Rückmeldung des Zählerstandes durch den Verbraucher (10) die Verwendung von Telefax (17) vorgesehen ist.

63. System nach einem der Ansprüche 23 bis 26 oder 60, **dadurch gekennzeichnet, daß** der Sprachcomputer (4) so ausgelegt ist, daß er sowohl Spracheingaben als auch Eingaben über eine Telefontastatur akzeptiert, erkennt und verarbeiten kann.
